# EUROPÄISCHE PATENTSCHRIFT

(11) **EP 4 269 830 B1**
(45) Veröffentlichungstag und Bekanntmachung des Hinweises auf die Patenterteilung: **02.07.2025**
(21) Anmeldenummer: 23164854.4
(22) Anmeldetag: 28.03.2023
(51) Int. Cl.: F16D 41/07, F16C 33/48, F16C 19/28, F16C 33/46

(54) **KÄFIGFREILAUF MIT KLEMMSTÜCKEN UND LAGERROLLEN**
FREEWHEEL CAGE WITH SPRAGS AND BEARING ROLLERS
ROUE LIBRE À CAGE AVEC CALES ET ROULEAUX DE PALIER

(30) Priorität: 25.04.2022 DE 102022109860
(43) Veröffentlichungstag der Anmeldung: 01.11.2023
(73) Patentinhaber: Ringspann GmbH, 61348 Bad Homburg (DE)
(72) Erfinder: Brzus, Augustyn, 63667 Nidda (DE)
(74) Vertreter: LBP Lemcke, Brommer & Partner Patentanwälte mbB

(56) Entgegenhaltungen:
- EP-A1- 3 540 251
- DE-A1- 102013 021 636
- DE-A1- 102014 117 162
- DE-A1- 102019 218 785
- DE-A1- 102023 100 875
- DE-B- 1 060 670
- DE-B- 1 157 037
- JP-U- S59 108 829

## Beschreibung

Die vorliegende Erfindung betrifft einen Käfigfreilauf zum Einbau in den Klemmspalt einer Wellen-/Nabenverbindung, insbesondere im Antrieb eines E-Bikes, nach dem Oberbegriff von Anspruch 1.

Käfigfreiläufe sind in zahlreichen Ausführungsformen bekannt, vgl. beispielsweise DE 10 2009 030 614 und DE 10 2011 108 413 der gleichen Anmelderin.

Bei einem Freilauf ist es wichtig, dass Welle und Nabe, in deren Klemmspalt der Freilauf eingebaut werden soll, in radialer Richtung möglichst spielfrei gegeneinander gelagert sein müssen. In der Regel erfolgt dies über ein zusätzliches, vom Freilauf separates Wälzlager. Dies erhöht jedoch das axiale Baumaß der Wellen-/Nabenverbindung. In verschiedenen Anwendungen, insbesondere im Tretlager eines E-Bike-Antriebs, ist ein möglichst geringes axiales Baumaß erwünscht.

Aus der DE 10 2019 2018785 A1 ist ein Käfigfreilauf bekannt, der in Umfangsrichtung aufeinanderfolgend sowohl mit Lagerrollen als auch mit Klemmkörpern bestückt ist. Die Lagerrollen dienen hierbei zur Lagerung von Welle und Nabe gegeneinander. Die Klemmkörper sind schwenkbar angeordnet, so dass sie eine relative Bewegung zwischen Welle und Nabe in eine Drehrichtung reibschlüssig sperren, in die andere freigeben. Eine Ringfeder, die in einem Schlitz in der radialen außenliegenden Fläche der Klemmkörper um die Klemmkörperreihe verläuft, sorgt für eine Anfederung der Klemmkörper in Einkuppelrichtung. Die Lagerrollen sind jeweils paarweise in zugehörigen Taschen des Käfigrings beiderseits der Ringfelder angeordnet. Durch die Lagerrollen ist somit eine Wälzlagerfunktion in den Freilaufkäfig mit integriert.

Nachteilig bei einem solchen Käfigfreilauf ist dessen aufwändige und schwierige Montage. Während die Klemmkörper durch die von außen um den Käfigfreilauf liegende Ringfeder gehalten und gegen Herausfallen gesichert sind, können die beiderseits der Ringfeder angeordneten Lagerrollen bei der Montage des Käfigs leicht herausfallen. Darüber hinaus ist die axiale Lage der Rollen nicht fixiert, was zur erschwerten Montage der Ringfeder und zur Kollision der Rollen mit der Ringfeder führen kann. Die Kollision kann die Fehlfunktion des Käfigfreilaufs verursachen. Es ist daher eine Aufgabe der vorliegenden Erfindung, einen Käfigfreilauf anzugeben, bei dem Montage und Einbau in eine Wellen-Nabe-Verbindung vereinfacht sind und/oder die Funktionalität des Käfigfreilaufs verbessert ist.

In US 6,279,708 ist ein Freilauf mit integriertem Kugellager gezeigt, bei dem zwischen einem Innenring und einem Außenring eine Kugellagerreihe und eine Klemmkörperreihe nebeneinander angeordnet sind. Kugeln und Klemmkörper sind in einem Käfig angeordnet, der die Kugeln in axialer Richtung zwischen Innen- und Außenring formschlüssig aufnimmt. Bei der Montage bzw. wenn Innen- und Außenring auseinandergenommen werden, können die Kugeln auch hier in radialer Richtung herausfallen.

Die JP 359108829U zeigt einen Freilauf für einen Anlasser. Zwischen einem Innenring und einem Außenring ist ein Freilaufkäfig angeordnet, der abwechselnd mit Lagerrollen und Klemmkörpern bestückt ist. Durch die Lagerrollen soll der einheitliche Abstand zwischen den Laufflächen von Innen- und Außenring sichergestellt werden. Der Käfig hält die Laufrollen in Position. Im Gegensatz zu einem Käfigfreilauf zum direkten Einbau in den Klemmspalt einer Wellen-/Nabenverbindung besteht bei einem Freilauf mit Innen- und Außenring das das Problem des Herausfallens der Lagerrollen nicht.

Die Aufgabe wird gelöst durch die Merkmale des Anspruchs 1. Vorteilhafte Ausgestaltungen sind den abhängigen Ansprüchen zu entnehmen.

Bei einem Käfigfreilauf der eingangs genannten Art ist vorgesehen, dass die Lagerrollen in ihren zugehörigen (ersten) Taschen des ringförmigen Käfigs in radialer Richtung formschlüssig aufgenommen sind. Dies vereinfacht einerseits die Bestückung des Käfigs in der Herstellung des Käfigfreilaufs als auch den späteren Einbau des Käfigfreilaufs zwischen eine Welle und eine Nabe, da die Lagerrollen nicht mehr herausfallen und verloren gehen können. Der Anwender erhält dadurch eine Baugruppe, die einfach in den Ringspalt zwischen Welle und Nabe eingeschoben werden kann.

In axialer Richtung sind die Lagerrollen erfindungsgemäß durch innenliegende Flächen der Käfigseitenränder und einen Mittelsteg, der die paarweise angeordneten Taschen voneinander trennt, positioniert. Die Breite des Stegs zwischen den Taschen ist vorzugsweise größer als der Durchmesser bzw. die Breite der Ringfeder.

Die formschlüssige Aufnahme der Rollen im Freilaufkäfig kann auch dadurch erreicht werden, dass der Freilaufkäfig aus mehreren Käfigteilen zusammengesetzt ist, die bei der Montage miteinander verrastet werden. Eine besonders vorteilhafte Konstruktion ergibt sich jedoch, wenn der Freilaufkäfig aus einem elastisch verformbaren Kunststoff, insbesondere als Spritzgussteil, hergestellt ist und die Lagerrollen durch elastische Verformung des Käfigs in ihre Taschen eingeclipst sind. Der Käfig kann somit einstückig ausgeführt sein. Der Einbau der Lagerrollen kann sowohl vor einer Bestückung mit Klemmstücken und Einlegen der Ringfeder, als auch danach erfolgen, indem die Lagerrollen einfach von außen oder innen in ihre zugehörigen Taschen eingedrückt werden.

Bei einer bevorzugten Ausführungsform weisen die Taschen für die Lagerrollen an einer Umfangsseite des Käfigs eine Breite auf, die zumindest dem Umfang der Lagerrollen entspricht und besitzen mindestens ein Paar, vorzugsweise zwei Paar ins Innere der Taschen ragender Vorsprünge, über welche die Lagerrollen in den Taschen in radialer Richtung formschlüssig gehalten sind. Somit muss der Freilaufkäfig nicht über die gesamte Länge der Lagerrolle, sondern nur im Bereich der Vorsprünge verformt werden, so dass die erforderlichen Montagekräfte reduziert sind. Je größer die Aussparungen zwischen den Vorsprüngen und je geringer die radiale Länge der Vorsprünge, umso geringer fallen die erforderlichen Verformungskräfte aus. Wenn die Taschen sowohl an der Außenumfangsseite des Käfigs als auch an dessen Innenumfangsseite entsprechende Vorsprünge aufweisen, können die Lagerrollen wahlweise sowohl von innen als auch von außen in ihre Taschen eingedrückt werden.

Vorzugsweise sind bei dem Käfigfreilauf mindestens drei, bevorzugt fünf Paar Lagerrollen in zugehörigen Taschen über den Umfang des Käfigs verteilt angeordnet. Zwischen den (ersten) Taschen mit den Lagerrollen sind hierbei in Umfangsrichtung jeweils mehrere (zweite) Taschen mit Klemmkörpern vorgesehen. Mindestens drei, bevorzugt fünf Rollenpaare gewährleisten eine sichere radiale Ausrichtung von Wellen- und Nabenbauteilen gegeneinander. Der in Umfangsrichtung verbleibende Raum kann für Klemmkörper genutzt werden, so dass eine ausreichend hohe Klemmfläche zur Verfügung steht, um die in Sperrrichtung zwischen Welle und Nabe auftretenden Kräfte zu übertragen. Bevorzugt sind hierbei in Umfangsrichtung mindestens zwei, weiter bevorzugt mindestens vier Klemmkörper aufeinander folgend angeordnet, bevor in Umfangrichtung wieder eine Lagerrolle folgt. Der Käfigfreilauf besitzt somit mindestens doppelt so viele, bevorzugt mindestens vier Mal so viele Klemmkörper wie Lagerrollen. Grundsätzlich kann gesagt werden, dass je mehr Klemmkörper zur Verfügung stehen, desto höher sind die Drehmomente, die in Sperrrichtung des Freilaufs übertragen werden können.

Zweckmäßigerweise sind die Taschen für die Klemmkörper durch Stege voneinander getrennt und der freie Abstand zwischen den Stegen ist jeweils so bemessen, dass dieser größer als eine radial innere jedoch kleiner als eine radial äußere in Umfangsrichtung orientierte Quererstreckung der Klemmkörper ist. Die Klemmkörper können somit von außen in ihre Taschen eingesetzt und anschließend die Ringfeder montiert werden, die die Klemmkörper im Freilaufkäfig hält, da die Klemmkörper nicht nach innen zwischen den Stegen hindurchfallen können. Somit werden die Klemmkörper durch die Ringfeder im Freilaufkäfig gehalten, während die Lagerrollen durch Formschluss in radialer Richtung gegen ein Herausfallen gesichert sind.

Weitere Vorteile und Ausgestaltungen ergeben sich aus dem nachfolgend beschriebenen Ausführungsbeispiel anhand der Figuren. Es zeigt:
- Figur 1: eine isometrische Darstellung eines Käfigfreilaufs mit Klemmkörpern und Lagerrollen,
- Figur 2: eine vergrößerte Darstellung des Freilaufkäfigs des in Figur 1 gezeigten Käfigfreilaufs und
- Figur 3: einen Schnitt entlang der Schnittlinie A-A in Figur 2.

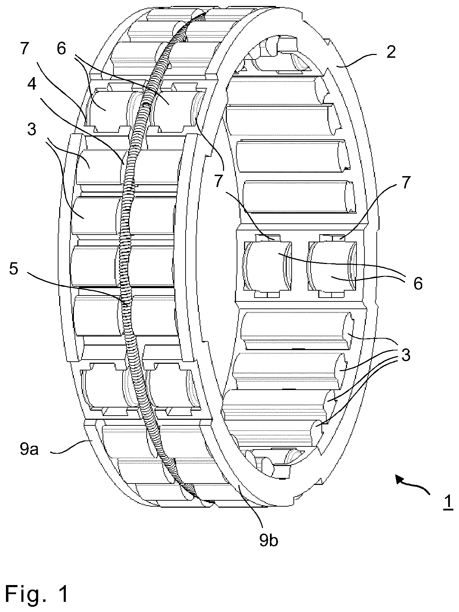

Der in Figur 1 gezeigte Käfigfreilauf 1 umfasst einen ringförmigen Käfig 2 (Käfigring) mit darin in an sich bekannter Weise schwenkbar eingesetzten Klemmkörpern 3. Die Klemmkörper 3 besitzen mittig einen Schlitz 4, in den um die gesamte Umfangsfläche der Klemmkörperreihe eine Ringfeder 5, etwa eine Spiralfeder, eingesetzt ist, welche die Klemmkörper 3 im Einkuppelsinn anfedert. Der Käfigfreilauf dient zum Einbau in dem Ringspalt zwischen einem Wellenbauteil und einem Nabenbauteil, wobei die Innenumfangsfläche des Nabenbauteils und die Außenumfangsfläche des Wellenbauteils jeweils als zylindrische Laufbahnen für die Klemmkörper 3 ausgebildet sind. Die zu den inneren und äußeren Laufbahnen an Wellen- beziehungsweise Nabenbauteilen orientierten Randflächen der Klemmkörper 3 wirken als Klemmkeile, die in eine Drehrichtung, das heißt in Sperrrichtung des Freilaufs, das Wellenbauteil gegenüber dem Nabenbauteil Verklemmen und so eine Relativdrehung blockieren. In der entgegengesetzten Drehrichtung, das heißt in Freilaufrichtung, kann das Wellenbauteil bei beispielsweise stehendem Nabenbauteil frei gedreht werden.

Grundsätzlich kann der erfindungsgemäße Käfigfreilauf 1 statt direkt zwischen ein Wellen- und ein Nabenbauteil auch zwischen einen Freilaufinnenring und einen Freilaufaußenring eingesetzt werden, die dann jeweils auf das Wellenbauteil aufgepresst bzw. ins Nabenbauteil eingepresst werden, und die zylindrischen Laufbahnen für die Klemmkörper 3 bilden.

Um in der Wellen-/Nabenverbindung das Wellenbauteil gegenüber dem Nabenbauteil zu zentrieren, besitzt der Käfigfreilauf 1 zusätzliche Lagerrollen 6, die je paarweise beiderseits der Ringfeder 5 in entsprechende Taschen 7 des Freilaufkäfigs 2 eingesetzt sind und die Funktion eines Rollenlagers übernehmen. Zwischen zwei Rollenpaaren 6 befinden sich jeweils vier aufeinanderfolgende Klemmkörper 3, so dass über den Umfang verteilt vier Mal so viele Klemmkörper wie Rollenpaare angeordnet sind.

Die Klemmkörper 3 eines Klemmkörper-Freilaufs, die häufig auch als Klemmstücke bezeichnet werden, sind bauartbedingt unrund ausgeführt, weisen also eine lange und eine kurze Quererstreckungsrichtung auf. In Ihrer langen Quererstreckung sind die Klemmkörper 3 etwas breiter als der Durchmesser der Lagerrollen 6, sodass sie sich beim Einkuppeln in dem von der Außenfläche des Wellenteils und der Innenlauffläche des Nabenteils gebildeten Ringspalt verklemmen. In ihrer kurzen Quererstreckungsrichtung sind die Klemmkörper 3 etwas schmaler als der Durchmesser der Lagerrollen 6, sodass sie, im Einkuppelsinn gegen die Laufflächen des Ringspalts angefedert, an diesen entlang gleiten.

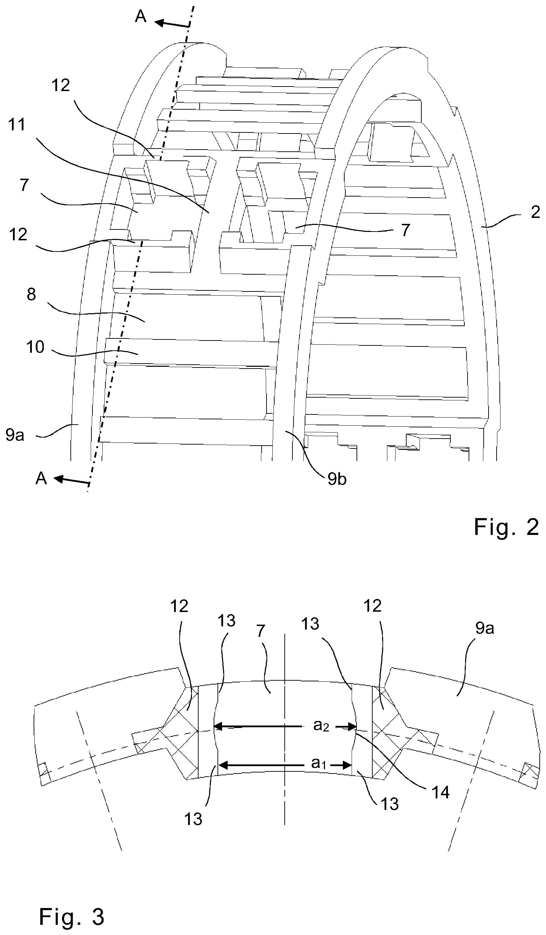

Der Käfig 2 ist in Figur 2 näher dargestellt. Er besitzt zwei ringförmige Randleisten 9a, 9b, die die Käfigseitenränder bilden und über in Axialrichtung verlaufende Stege 10 miteinander verbunden sind. Zwischen den Stegen 10 sind Aufnahmetaschen 8 für die Klemmkörper 3 ausgebildet. Nach jeweils vier Taschen 8 für Klemmkörper 3 folgt ein Taschenpaar 7 für Lagerrollen 6. Über dem Mittelsteg 11 verläuft bei dem fertig montierten Käfigfreilauf die Ringfeder 5.

Die Taschen 7 sind so ausgebildet, dass diese die Lagerrollen 6 jeweils formschlüssig aufnehmen. Hierzu sind an den seitlichen Begrenzungsstegen 12 der Taschen 7 jeweils radial innenliegend und außenliegend ins Innere der Taschen ragende Vorsprünge beziehungsweise Nocken 13 angeordnet. Der Abstand a₁ zweier Nocken 13 in Umfangsrichtung ist kleiner als der Außendurchmesser einer Lagerrolle 6. Zwischen dem inneren und äußeren Vorsprung 13 eines Begrenzungsstegs 12 ist eine gerundete Kontur 14 ausgebildet, die dem Umfangsverlauf der Lagerrollen 6 angepasst sind. Der Abstand a₂ in der Mitte zwischen zwei gegenüberliegenden gerundeten Konturen 14 ist hierbei etwas größer gewählt als der Durchmesser der Lagerrollen 6.

Der Käfig 2 ist aus einem hochwertigen Kunststoffmaterial wie etwa Polyamid oder Polyetheretherketon (PEEK) hergestellt, der eine gewisse elastische Eigenschaft aufweist. Hierdurch können die Lagerrollen 6 zur Montage von innen oder von außen in die betreffenden Taschen 7 eingedrückt werden. Durch den Druck auf die Lagerrollen 6 wird die zugehörige Tasche 7 durch elastische Verformung der Vorsprünge 13 erweitert. Nachdem die Lagerrolle 6 ihre mittige Radiallage erreicht, lässt die Verformung nach und die Lagerrolle 6 wird durch die Vorsprünge 13 und die gebogene Kontur 14 in der Mitte der Tasche gehalten.

In axialer Richtung wird die Lagerrolle 6 in der Tasche 7 durch innenliegende Flächen der Randleiste 9a bzw. der Randleiste 9b und den Mittelstegs 11 positioniert. Die Breite des Mittelstegs 11 ist größer als der Außendurchmesser der Ringfeder. Dadurch wird sichergestellt, dass die Lagerrollen bei der Montage und später im Betrieb nicht in Kontakt mit Ringfeder kommen.

Zur Montage des Käfigfreilaufs kann der Käfig 2 zunächst mit Klemmstücken 3 bestückt werden, indem diese von außen radial in die Taschen 8 eingesetzt werden. Der Abstand zwischen zwei Stegen 10 in Umfangsrichtung ist so bemessen, dass dieser größer als die in Umfangsrichtung orientierte Breite der radial inneren Seite der Klemmkörper 3 ist. Die radial äußere Breite der Klemmkörper 3 ist jedoch größer als der Abstand zwischen zwei Begrenzungsstegen 8, so dass die Klemmkörper 3 nicht nach innen durch ihre Taschen 8 hindurch fallen können. Anschließend wird die Ringfeder 5 um die Klemmstücke 3 gelegt und schließlich können die Lagerrollen 6 in ihre zugehörigen Taschen 7 eingedrückt werden. Ebenso ist es möglich, dass die Taschen 7 zunächst mit den Lagerrollen 6 bestückt werden und anschließend die Klemmkörper 3 in die Taschen 8 eingesetzt und die Ringfeder 5 um den Außenumfang der Klemmkörperreihe gelegt wird.

Bei dem fertig montierten Käfigfreilauf werden somit die Klemmkörper 3 durch die Ringfeder 5 gehalten, während die Lagerrollen 6 in ihren Taschen formschlüssig und verliersicher gehalten sind. Der fertig montierte Käfigfreilauf kann zur Herstellung eines Freilaufs somit auf ein Wellenbauteil aufgeschoben und mit diesem in ein zugehöriges Nabenbauteil eingesetzt werden oder umgekehrt in ein Nabenbauteil eingeschoben und anschließend ein Wellenbauteil hindurchgesteckt werden.

Von dem im Ausführungsbeispiel gezeigten Käfigfreilauf sind verschiedene Abwandlungen möglich und im Rahmen der vorliegenden Erfindung mit umfasst. So können beispielsweise statt fünf Paaren von Lagerrollen auch mehr oder weniger Lagerrollenpaare verwendet werden. Beispielsweise können Minimum drei Lagerrollenpaare im 120°-Winkel um den Umfang des Freilaufkäfigs verteilt angeordnet werden, so dass mehr Platz für weitere Klemmkörper verbleibt. Auch können die Lagerrollen 6 eines Lagerrollenpaares über eine gemeinsame Mittelachse miteinander verbunden sein. In diesem Fall kann auf den Mittelsteg 11 verzichtet oder dieser mit einer entsprechenden Aussparung für die gemeinsame Achse des Lagerrollenpaares 6 versehen sein. An den axial innenliegenden Stirnseiten der Randleisten 9a und 9b können zusätzliche Führungsflächen ausgebildet sein, die die Schwenkbewegung der Klemmkörper begrenzen. Gleichsam können an den axial inneren Stirnflächen der Randleisten 9a, 9b Zapfen vorgesehen sein, die in entsprechende stirnseitige Ausnehmungen der Klemmkörper eingreifen und hierdurch eine Schwenkachse für die Klemmkörper definieren. In diesem Fall kann auch die Montage der Klemmkörper durch leichten Druck und damit einhergehende elastische Verformung des Käfigs 2 erfolgen, bis die Zapfen in den stirnseitigen Ausnehmungen der Klemmkörper einrasten. Gleichsam können entsprechende Zapfen an den Klemmkörpern und Ausnehmungen für die Zapfen an den inneren Stirnflächen der Randleisten 9a, 9b vorgesehen sein. Des Weiteren wäre es jedoch möglich, den Käfig zweiteilig auszuführen mit z.B. zwei Teilringen, die im Bereich der Stege 10, 12 über Rastverbindungen miteinander verrastet werden, wie dies beispielsweise in der DE 20 2017 106205 U1 gezeigt ist.

## Patentansprüche

1. Käfigfreilauf (1) zum Einbau in den Klemmspalt zwischen einer Welle und einer Nabe mit einem ringförmigen Käfig (2), der in Umfangsrichtung aufeinanderfolgend sowohl mit Lagerrollen (6) zur Lagerung von Nabe und Welle gegeneinander, als auch mit schwenkbar in dem Käfig (2) angeordneten Klemmkörpern (3) bestückt ist, wobei die Klemmkörper (3) eine Relativbewegung zwischen Welle und Nabe in eine Drehrichtung reibschlüssig sperren, in die andere freigeben und durch eine in einem Schlitz (4) in der radial außenliegenden Fläche der Klemmkörper (3) um die Reihe der Klemmkörper (3) verlaufende Ringfeder (5) in Einkuppelrichtung federbelastet sind, und die Lagerrollen (6) jeweils paarweise in zugehörigen Taschen (7) des Käfigs (2) beiderseits der Ringfeder (5) angeordnet sind,
die Lagerrollen (6) in den zugehörigen Taschen (7) in radialer Richtung formschlüssig aufgenommen sind,
**dadurch gekennzeichnet, dass**
die Lagerrollen (6) durch innenliegende Flächen von Käfigseitenrändern (9a, 9b) des Käfigs (2) und einen Mittelsteg (11), der die paarweise angeordneten Taschen (7) voneinander trennt, axial positioniert sind.

2. Käfigfreilauf nach Anspruch 1, bei dem der Käfig (2) aus einem elastisch verformbaren Kunststoff hergestellt ist und die Lagerrollen (6) durch elastische Verformung des Käfigs (2) in ihre Taschen (7) eingeklipst sind.

3. Käfigfreilauf nach Anspruch 1 oder 2, bei dem die Taschen (7) für die Lagerrollen (6) an zumindest einer Umfangsseite des Käfigs (2) eine Breite aufweisen, die zumindest dem Umfang der Lagerrollen (6) entspricht und mindestens ein Paar ins Innere der Taschen ragender Vorsprünge (13) besitzen, über welche die Lagerrollen (6) in den Taschen (7) in radialer Richtung formschlüssig gehalten sind.

4. Käfigfreilauf nach einem der vorangehenden Ansprüche, bei dem mindestens drei Paar Lagerrollen (6) in zugehörigen Taschen (7) über den Umfang des Käfigs (2) verteilt angeordnet sind und zwischen den Taschen (7) mit den Lagerrollen (6) in Umfangsrichtung jeweils mehrere Taschen (8) mit Klemmkörpern (3) vorgesehen sind.

5. Käfigfreilauf nach Anspruch 4, bei dem in Umfangsrichtung mindestens zwei Klemmkörper (3) aufeinanderfolgen, bevor in Umfangsrichtung wieder eine Lagerrolle (6) folgt.

6. Käfigfreilauf nach einem der vorangehenden Ansprüche, bei dem die Taschen (8) für die Klemmkörper (3) durch Stege (10) voneinander getrennt sind und der freie Abstand zwischen den Stegen (10) jeweils so bemessen ist, dass dieser größer als eine radial innere jedoch kleiner als eine radial äußere, in Umfangsrichtung orientierte Breite der Klemmkörper (3) ist.

## Claims

1. Cage freewheel (1) for installation into the clamping gap between a shaft and a hub, the cage freewheel having an annular cage (2) fitted with, following one another in a circumferential direction, as well with bearing rollers (6) for mounting the hub and the shaft with respect to one another, and with clamping bodies (3) which are arranged pivotably in the cage (2), wherein the clamping bodies (3) block a relative movement between the shaft and the hub in a frictionally locking manner in one rotational direction, and enable it in the other, and are spring-loaded by an annular spring (5) in a coupling direction, the annular spring extending around the row of the clamping bodies (3) in a slot (4) in a radially outer surface of the clamping bodies (3), and the bearing rollers (6) are arranged in each case in pairs in associated pockets (7) of the cage (2) on both sides of the annular spring (5), the bearing rollers (6) being received in a positively locking manner in a radial direction in the associated pockets (7),
**characterized in that**
the bearing rollers (6) are positioned axially by way of inner surfaces of cage side edges (9a, 9b) of the cage (2) and a center web (11) which separates the associated pockets (7) arranged in pairs from one another.

2. Cage freewheel according to claim 1, wherein the cage (2) is made from an elastically deformable plastic, and the bearing rollers (6) are clipped into their pockets (7) by elastic deformation of the cage (2).

3. Cage freewheel according to claim 1 or 2, wherein the pockets (7) for the bearing rollers (6) have a width on at least one circumferential side of the cage (2), which width corresponds at least to the circumference of the bearing rollers (6), and at least one pair of projections (13) which protrude into the interior of the pockets and via which the bearing rollers (6) are held in a positively locking manner in the radial direction in the pockets (7).

4. Cage freewheel according to any one of the preceding claims, wherein at least three pairs of bearing rollers (6) are arranged distributed over the circumference of the cage (2) in associated pockets (7), and multiple pockets (8) are provided with clamping bodies (3) in each case in the circumferential direction between the pockets (7) with the bearing rollers (6).

5. Cage freewheel according to claim 4, wherein at least two clamping bodies (3) follow one another in the circumferential direction before one bearing roller (6) again follows in the circumferential direction.

6. Cage freewheel according to any one of the preceding claims, wherein the pockets (8) for the clamping bodies (3) are separated from one another by webs (10), and the free spacing between the webs (10) is measured in each case such that said free spacing is greater than a radially inner width but smaller than a radially outer width, oriented in the circumferential direction, of the clamping bodies (3).

## Revendications

1. Roue libre à cage (1) pour l'installation dans la fente de serrage entre un arbre et un moyeu avec une cage (2) annulaire qui est équipée successivement dans le sens périphérique non seulement de rouleaux de palier (6) pour le logement du moyeu et de l'arbre l'un contre l'autre, mais aussi de corps de serrage (3) disposés de manière pivotante dans la cage (2), dans laquelle les corps de serrage (3) bloquent par frottement un mouvement relatif entre l'arbre et le moyeu dans un sens de rotation, le libèrent dans l'autre et sont sollicités par ressort par un ressort annulaire (5) s'étendant dans une fente (4) dans la surface radialement extérieure des corps de serrage (3) autour de la rangée des corps de serrage (3) dans le sens de couplage, et les rouleaux de palier (6) sont disposés respectivement par paires dans des poches (7) afférentes de la cage (2) des deux côtés du ressort annulaire (5), les rouleaux de palier (6) sont reçus à complémentarité de formes dans les poches (7) afférentes dans le sens radial,
**caractérisée en ce que**
les rouleaux de palier (6) sont positionnés axialement à travers des surfaces intérieures de bords latéraux de cage (9a, 9b) de la cage (2) et une nervure médiane (11) qui sépare les poches (7) disposées par paires l'une de l'autre.

2. Roue libre à cage selon la revendication 1, pour laquelle la cage (2) est fabriquée en une matière plastique déformable élastiquement et les rouleaux de palier (6) sont clipsés par déformation élastique de la cage (2) dans leurs poches (7).

3. Roue libre à cage selon la revendication 1 ou 2, pour laquelle les poches (7) pour les rouleaux de palier (6) présentent au niveau d'un côté périphérique de la cage (2) une largeur qui correspond au moins à la périphérie des rouleaux de palier (6) et possèdent au moins une paire de saillies (13) dépassant à l'intérieur des poches, par le biais desquelles saillies les rouleaux de palier (6) sont maintenus à complémentarité de formes dans les poches (7) dans le sens radial.

4. Roue libre à cage selon l'une quelconque des revendications précédentes, pour laquelle au moins trois paires de rouleaux de palier (6) sont disposées réparties dans des poches (7) afférentes sur la périphérie de la cage (2) et respectivement plusieurs poches (8) avec des corps de serrage (3) sont prévues entre les poches (7) avec les rouleaux de palier (6) dans le sens périphérique.

5. Roue libre à cage selon la revendication 4, pour laquelle au moins deux corps de serrage (3) se suivent dans le sens périphérique, avant que de nouveau un rouleau de palier (6) suive dans le sens périphérique.

6. Roue libre à cage selon l'une quelconque des revendications précédentes, pour laquelle les poches (8) pour les corps de serrage (3) sont séparées par des nervures l'une de l'autre et la distance libre entre les nervures (10) est dimensionnée respectivement de sorte que celle-ci soit supérieure à une largeur des corps de serrage (3) radialement intérieure toutefois inférieure à une largeur des corps de serrage (3) radialement extérieure, orientée dans le sens périphérique.
